# EUROPEAN PATENT SPECIFICATION

(11) **EP 0 768 991 B1**
(45) Date of publication and mention of the grant of the patent: **01.04.1998**
(21) Application number: 95923478.2
(22) Date of filing: 03.07.1995
(51) Int. Cl.: C04B 33/32, C04B 33/14

(54) **FIRING COLOURED ARTICLES**
BRENNEN VON GEFÄRBTEN GEGENSTÄNDEN
PROCEDE DE CUISSON D'ARTICLES COLORES

(30) Priority: 05.07.1994 GB 9413555
(43) Date of publication of application: 23.04.1997
(73) Proprietor: British Ceramic Research Limited, Stoke-on-Trent Staffordshire ST4 7LQ (GB)
(72) Inventor: CARTWRIGHT, Peter, James, Stoke-on-Trent Staffordshire ST4 7LQ (GB)
(74) Representative: Sales, Robert Reginald
(86) International application number: GB9501558
(87) International publication number: WO9601235

(56) References cited:
- EP-A- 0 220 553
- EP-A- 0 247 460
- DE-C- 4 210 501
- DATABASE WPI Section Ch, Week 9415 Derwent Publications Ltd., London, GB; Class L02, AN 94-125381 & SU-A-1 791 423 ( UNIV KAZA PEDAGOGICAL SECTKII IM ABAYA), 30 January 1993

## Description

This invention concerns improvements in or relating to producing coloured articles by firing, and particularly but not exclusively firing clay bodies.

Some clay bodies when fired produce a desired colour for use. For example, many clays such as some marls, shales, ball clays and fire clays are "red firing clays", i.e. upon firing they produce a red coloured article suitable for use for example as a floor tile. In red firing clays the colour occurs due to the formation of a glassy phase containing ferric (Fe 3+) ions, and subsequent crystallisation of hematite from this glassy phase.

Conventionally such clays have been fired in slow firing kilns for typically 48 hours. This long firing time has been required to ensure that the correct colour is formed. The firing is usually carried out in tunnel kilns where relatively large loads of material are carried on a number of kiln cars. Such firing obviously consumes considerable energy and is not readily suited for automatic working.

Other clay bodies can be fired to produce a desired colour. For example black, brown, buff or yellow colours can be obtained as a result of the inclusion respectively of manganese, anatase, rutile or titanium in clay.

In this specification the term "transition temperature" is to be understood as the temperature below which a colour forming element in a clay body is stable in the presence of oxygen in a required oxidation state at which the colour is formed; and above which the element is stable in a different oxidation state at which the required colour is not formed. For example, in red firing clays where the colour is formed by iron, above the transition temperature the iron moves from being stable in the ferric (Fe 3+) state to the ferrous (Fe 2+) state.

In this specification the term "colour crystallisation range" is to be understood as the range of temperatures at which crystallisation of the colour forming material occurs. For example, in red firing bodies the colour crystalisation range is the range of temperatures at which hematite crystallises.

According to the present invention there is provided a method of producing a coloured article, the method comprising firing a clay body, the firing comprising heating the body to a peak firing temperature; retaining the body at or around said peak firing temperature; allowing the body to cool to an oxidation temperature just below the transition temperature; retaining the body at or around said oxidation temperature; allowing the body to cool to a colour development temperature within the colour crystallisation range; retaining the body at or around said colour development temperature; and subsequently allowing the body to cool.

The oxidation temperature is preferably between 10 and 20°C below the transition temperature.

The final cooling of the body is preferably controlled at least above the quartz inversion temperature (573°C).

An additive which increases colour formation is preferably added to the clay body prior to firing. The additive preferably aids crystal growth.

The clay body is preferably fired by fast firing in a roller hearth kiln.

The invention also provides a method of producing a red article, the method comprising firing a red firing clay body by a method according to any of the preceding five paragraphs.

The additive preferably comprises iron oxide, and desirably 2 - 3% of the additive is used. The particle size of the additive is preferably below 1 micron.

The peak firing temperature is preferably substantially 1190°C.

The oxidation temperature is preferably between 1000-1050°C and is desirably around 1030°C. The body is preferably retained at the oxidation temperature for around 10 minutes.

The colour development temperature is preferably within the range 900-1000°C and desirably within the range 925-975°C.

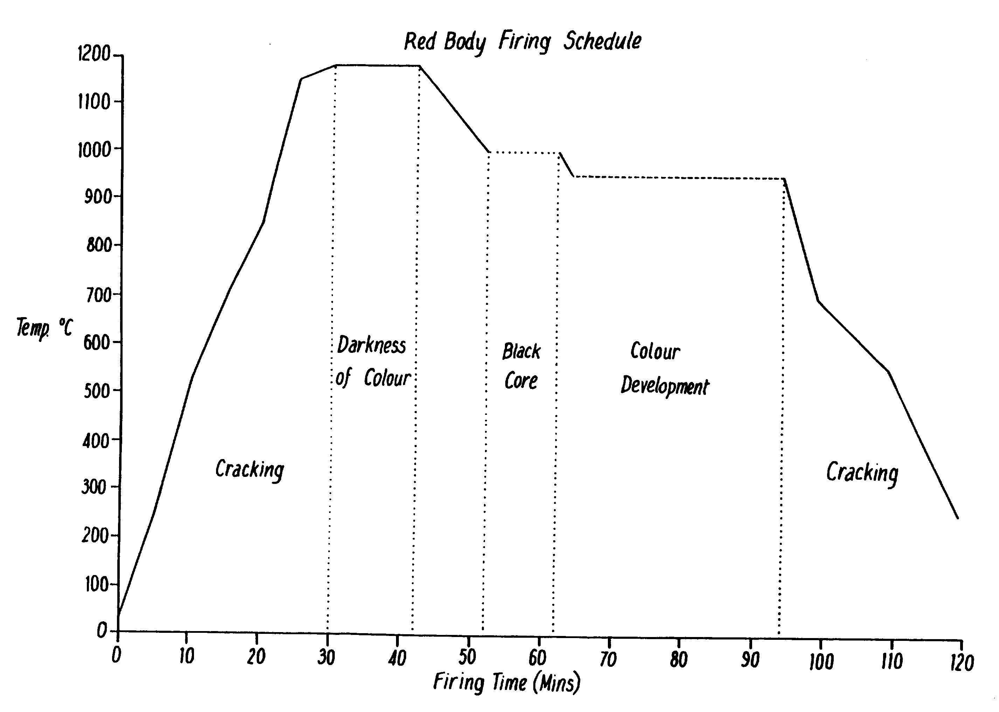

An embodiment of the present invention will now be described by way of example only with reference to the single figure of the accompanying drawing, which shows a firing schedule for a red clay body, according to the present invention.

The firing schedule as shown is suitable for firing an unfired red clay body tile with a density of 1.84g/cm³ and a size of 200 x 200 x 8 mm. The clay body comprises Etruria marl mixed with 2% Harcross pigment grade RY 4600 iron oxide.

The tile is heated up to a peak firing temperature of 1190°C and held there for a little over 10 minutes to produce a glassy phase. The tile is then allowed to cool to a little over 1000°C and held at this temperature for around 10 minutes. At this oxidation temperature the iron in the glassy phase is oxidised to the ferric state (Fe 3+). The tile is subsequently allowed to cool to around 950°C where it is held for a further period of a little over 30 minutes for colour development. At this colour development temperature hematite crystallises from the glassy phase to produce the required red colour. The rate of crystallisation of hematite is increased greatly by the iron oxide additive. The tile is subsequently allowed to cool and the cooling is regulated, particularly past the quartz point 573°C where there is a change in the crystalline form of the quartz, to prevent cracking.

A fired tile was produced. The colour of this tile was determined using a 45°/0° Hunterlab colorimeter which employed C illuminant and 2° observer. The colour expressed using the CIE L*a*b* system was L* 44.1, a* 18.2, and b* 17.4. The colour ranges typically sought for such a red tile are L* 38 to 46; a* 12 to 24; and b* 12 to 24.

As can be seen from the firing schedule the tile was fired by fast firing in approximately 2 hours in a roller hearth kiln, in contrast to a conventional slow firing of around 48 hours in a tunnel kiln. This provides for considerable energy saving and is readily suited for automated production. In roller hearth kilns tiles would be fired in a single layer, as opposed to a large load on a kiln car where different conditions can occur between the exterior and interior of the load. Firing tiles in a roller hearth kiln improves heat transfer and hence facilitates the rapid heating and cooling rates required. Retaining a tile at the oxidation temperature ensures oxidation to the ferric state. If this does not fully occur, colour formation will only occur on the outside of the tile and a black core will occur, i.e. a central non red core. The time required at the oxidation temperature can vary, particularly with different densities of tile.

The red colour development is due to the crystallisation of hematite from the glassy phase. The iron oxide additive greatly increases the rate of this crystallisation. The amount of time the tile is held at the colour development temperature is dependent on the colour required, and if the time is reduced a yellower colour will be achieved. Whilst the described example relates to Etruria marl, other types of marls, shales, ball clays or fire clays could be used.

Whilst the above example relates to fast firing, the invention could be used with slow firing with suitable lengths of dwell at the oxidation temperature and colour development temperature. Also, whilst the above example relates to red firing clays, this invention could be used with other colour firing clays such as for example black, chocolate, buff or yellow, where the colours occur as a result of the inclusion respectively of manganese, anatase, rutile or titanium in the clay.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of producing a coloured article, the method comprising firing a clay body, characterised in that the firing comprises heating the body to a peak firing temperature; retaining the body at or around said peak firing temperature; allowing the body to cool to an oxidation temperature just below the transition temperature; retaining the body at or around said oxidation temperature; allowing the body to cool to a colour development temperature within the colour crystallisation range; retaining the body at or around said colour development temperature; and subsequently allowing the body to cool.

2. A method according to claim 1, characterised in that the oxidation temperature is between 10 and 20°C below the transition temperature.

3. A method according to claims 1 or 2, characterised in that the final cooling of the body is controlled at least above the quartz inversion temperature (573°C).

4. A method according to any of claims 1 to 3, characterised in that an additive which increases colour formation is added to the clay body prior to firing.

5. A method according to claim 4, characterised in that the additive aids crystal growth.

6. A method according to any of the preceding claims, characterised in that the clay body is fired by fast firing in a roller hearth kiln.

7. A method of producing a red article, characterised in that the method comprises firing a red firing clay body by a method according to any of the preceding claims.

8. A method according to claim 7 when dependent on at least claim 4, characterised in that the additive comprises iron oxide.

9. A method according to claims 7 or 8 when dependent on at least claim 4, characterised in that 2 - 3% of the additive is used.

10. A method according to any of claims 7 to 9 when dependent on at least claim 4, characterised in that the particle size of the additive is below 1 micron.

11. A method according to any of claims 7 to 10, characterised in that the peak firing temperature is substantially 1190°C.

12. A method according to any of claims 7 to 10, characterised in that the oxidation temperature is between 1000-1050°C.

13. A method according to claim 12, characterised in that the oxidation temperature is around 1030°C.

14. A method according to any of claims 7 to 13, characterised in that the body is retained at the oxidation temperature for around 10 minutes.

15. A method according to any of claims 7 to 14, characterised in that the colour development temperature is within the range 900-1000°C.

16. A method according to claim 15, characterised in that the colour development temperature is within the range 925-975°C.

## Patentansprüche

1. Verfahren zum Herstellen eines gefärbten Gegenstandes, wobei das Verfahren das Brennen eines Tonkörpers enthält, dadurch gekennzeichnet, daß das Brennen enthält das Erhitzen des Körpers auf eine Spitzenbrenntemperatur; das Halten des Körpers bei oder im Bereich der Spitzenbrenntemperatur; das Abkühlenlassen des Körpers auf eine knapp unterhalb der Übergangstemperatur liegende Oxidationstemperatur; das Halten des Körpers bei oder im Bereich der Oxidiationstemperatur; das Abkühlenlassen des Körpers auf eine Farbentwicklungstemperatur innerhalb des Farbkristallisationsbereichs; das Halten des Körpers bei oder im Bereich der Farbentwicklungstemperatur; und anschließendes Abkühlenlassen des Körpers.

2. Verfahren nach Anspruch 1, dadurch gekennzeichnet, daß die Oxidationstemperatur zwischen 10 und 20° C unterhalb der Übergangstemperatur liegt.

3. Verfahren nach Anspruch 1 oder 2, dadurch gekennzeichnet, daß das abschließende Abkühlen des Körpers zumindest oberhalb der Quarzinversionstemperatur (573° C) kontrolliert abläuft.

4. Verfahren nach einem der Anssprüche 1 bis 3, dadurch gekennzeichnet, daß dem Tonkörper vor dem Brennen ein Additiv hinzugefügt wird, das die Farbbildung verstärkt.

5. Verfahren nach Anpruch 4, dadurch gekennzeichnet, daß das Additiv das Kristallwachstum unterstützt.

6. Verfahren nach einem der vorstehenden Ansprüche, dadurch gekennzeichnet, daß der Tonkörper durch schnelles Brennen in einem Rollenherdofen gebrannt wird.

7. Verfahren zum Herstellen eines roten Gegenstandes, dadurch gekennzeichnet, daß das Verfahren das Brennen eines rotbrennenden Tonkörpers nach einem Verfahren gemäß einem der vorstehenden Ansprüche enthält.

8. Verfahren nach Anspruch 7 in Abhängigkeit zumindest von Anspruch 4, dadurch gekennzeichnet, daß das Additiv Eisenoxid enthält.

9. Verfahren nach Anspruch 7 oder 8 in Abhängigkeit zumindest von Anspruch 4, dadurch gekennzeichnet, daß 2 bis 3% von dem Additiv verwendet wird.

10. Verfahren nach einem der Ansprüche 7 bis 9 in Abhängigkeit zumindest von Anspruch 4, dadurch gekennzeichnet, daß die Partikelgröße des Additivs kleiner als 1 Mikrometer ist.

11. Verfahren nach einem der Ansprüche 7 bis 10, dadurch gekennzeichnet, daß die Spitzenbrenntemperatur im wesentlichen 1190° C beträgt.

12. Verfahren nach einem der Ansprüche 7 bis 10, dadurch gekennzeichnet, daß die Oxidationstemperatur zwischen 1000 - 1050° C liegt.

13. Verfahren nach Anspruch 12, dadurch gekennzeichnet, daß die Oxidationstemperatur etwa 1030° C beträgt.

14. Verfahren nach einem der Ansprüche 7 bis 13, dadurch gekennzeichnet, daß der Körper etwa 10 Minuten bei der Oxidationstemperatur gehalten wird.

15. Verfahren nach einem der Ansprüche 7 bis 14, dadurch gekennzeichnet, daß die Farbentwicklungstemperatur innerhalb des Bereichs 900 - 1000° C liegt.

16. Verfahren nach Anspruch 15, dadurch gekennzeichnet, daß die Farbentwicklungstemperatur innerhalb des Bereichs 925 - 975° C liegt.

## Revendications

1. Procédé de production d'un objet coloré, le procédé consistant à faire cuire un corps en argile, caractérisé en ce que la cuisson comprend le fait de chauffer le corps jusqu'à une température de cuisson maximale ; maintenir le corps à cette température de cuisson maximale ou à une température proche de cette dernière ; laisser refroidir le corps jusqu'à une température d'oxydation située juste en-dessous de la température de transition ; maintenir le corps à la température d'oxydation ou à une température proche de cette dernière ; laisser refroidir le corps jusqu'à une température de développement des couleurs située à l'intérieur de la gamme de cristallisation des couleurs ; maintenir le corps à la température de développement des couleurs ou à une température proche de cette dernière ; et laisser ensuite refroidir le corps.

2. Procédé selon la revendication 1, caractérisé en ce que la température d'oxydation se situe entre 10 et 20° en-dessous de la température de transition.

3. Procédé selon les revendications 1 ou 2, caractérisé en ce que le refroidissement final du corps est commandé au moins au-dessus de la température d'inversion du quartz (573°C).

4. Procédé selon l'une quelconque des revendications 1 à 3, caractérisé en ce qu'un additif favorisant la formation de la couleur est ajouté au corps en argile avant la cuisson.

5. Procédé selon la revendication 4, caractérisé en ce que l'additif favorise la croissance de cristaux.

6. Procédé selon l'une quelconque des revendications précédentes, caractérisé en ce que le corps en argile est cuit par cuisson rapide dans un four à rouleaux.

7. Procédé de production d'un objet rouge, caractérisé en ce que le procédé comprend la cuisson d'un corps en argile rouge à cuire suivant un procédé selon l'une quelconque des revendications précédentes.

8. Procédé selon la revendication 7 lorsque celle-ci est rattachée à au moins la revendication 4, caractérisé en ce que l'additif comprend de l'oxyde ferrique.

9. Procédé selon les revendications 7 ou 8 lorsque celles-ci sont rattachées à au moins la revendication 4, caractérisé en ce que 2-3 % de l'additif est utilisé.

10. Procédé selon l'une quelconque des revendications 7 à 9 lorsque celles-ci sont rattachées à au moins la revendication 4, caractérisé en ce que la taille de particules de l'additif est inférieure à 1 micron.

11. Procédé selon l'une quelconque des revendications 7 à 10, caractérisé en ce que la température maximale de cuisson est sensiblement de 1190°C.

12. Procédé selon l'une quelconque des revendications 7 à 10, caractérisé en ce que la température d'oxydation est située entre 1000 et 1050°C.

13. Procédé selon la revendication 12, caractérisé en ce que la température d'oxydation est approximativement de 1030°C.

14. Procédé selon l'une quelconque des revendications 7 à 13, caractérisé en ce que le corps est maintenu à la température d'oxydation pendant environ 10 minutes.

15. Procédé selon l'une quelconque des revendications 7 à 14, caractérisé en ce que la température de développement des couleurs se situe dans la plage de 900 à 1000°C.

16. Procédé selon la revendication 15, caractérisé en ce que la température de développement des couleurs se situe dans la plage de 925 à 975°C.
